# EUROPEAN PATENT SPECIFICATION

(11) **EP 2 308 884 B1**
(45) Date of publication and mention of the grant of the patent: **06.05.2015**
(21) Application number: 09794393.0
(22) Date of filing: 06.07.2009
(51) Int. Cl.: C07F 7/12, C08F 8/42, C08G 65/336, C08L 63/00

(54) **METHOD FOR PRODUCING -HETERO-SUBSTITUTED ALKYLHALOHYDROSILANE AND USE THEREOF**
VERFAHREN ZUR HERSTELLUNG VON HETEROSUBSTITUIERTEM ALKYLHALOHYDROSILAN UND SEINE VERWENDUNG
PROCÉDÉ DE PRODUCTION D'UN ALKYLHALOGÉNOHYDROSILANE SUBSTITUÉ PAR UN GROUPEMENT HÉTÉRO EN ET SON UTILISATION

(30) Priority: 08.07.2008 JP 2008178319; 08.07.2008 JP 2008178327; 08.07.2008 JP 2008178334; 28.08.2008 JP 2008219862; 28.04.2009 JP 2009109474
(43) Date of publication of application: 13.04.2011
(60) Divisional application: 11155429.1
(73) Proprietor: KANEKA CORPORATION, Osaka (JP)
(72) Inventor: WAKABAYASHI, Katsuyu, Takasago-shi Hyogo 651-2137 (JP); TANAKA, Hidenori, Settsu-shi Osaka 566-0072 (JP)
(74) Representative: Hoffmann Eitle
(86) International application number: PCT/JP2009/062272
(87) International publication number: WO 2010/004948

(56) References cited:
- EP-A1- 0 652 221
- JP-A- 2009 062 210
- US-A- 4 096 161
- US-A- 5 654 459
- US-A- 5 965 762
- HASSLER K ET AL: "The (chloromethyl) dihalosilanes X2HSiCH2Cl (X = F, Cl, Br, I): Synthesis, multinuclear NMR spectroscopy and rotational isomerism examined by Raman spectroscopy", EUROPEAN JOURNAL OF INORGANIC CHEMISTRY, vol. 2004, no. 21, November 2004 (2004-11) , pages 4259-4265, XP008141089, ISSN: 1434-1948, DOI: 10.1002/EJIC.200400305
- GUIRGIS G A ET AL: "Spectra and structure of silicon-containing compounds. XXX. Raman and infrared spectra, conformational stability, vibrational assignment of chloromethyl silyl dichloride", SPECTROCHIMICA ACTA PART A: MOLECULAR AND BIOMOLECULAR SPECTROSCOPY, vol. 58, no. 9, July 2002 (2002-07), pages 1839-1852, XP55007902, ISSN: 1386-1425, DOI: 10.1016/S1386-1425(01)00643-6
- SEYFERTH D ET AL: "The Preparation of Chloromethyl Derivatives of Germanium and Silicon by the Diazomethane Method", JOURNAL OF THE AMERICAN CHEMICAL SOCIETY, vol. 77, no. 4, 20 February 1955 (1955-02-20), pages 907-908, XP55007910, ISSN: 0002-7863, DOI: 10.1021/ja01609a031
- BURGER H ET AL: "Difluorocarbene insertion into Si-H bonds: the preparation and properties of difluoromethylsilanes", JOURNAL OF ORGANOMETALLIC CHEMISTRY, vol. 401, no. 3, 15 January 1991 (1991-01-15), pages 249-260, XP026639037, ISSN: 0022-328X, DOI: 10.1016/0022-328X(91)86223-D
- BELLAMA J M ET AL: "Thermal rearrangement of (chloromethyl)silanes", JOURNAL OF THE CHEMICAL SOCIETY, CHEMICAL COMMUNICATIONS, no. 24, 1975, pages 985-986, XP9152497, DOI: 10.1039/C39750000985
- WHITMORE F C ET AL: "Hydrogen-halogen exchange reactions of triethylsilane. A new rearrangement of neopentyl chloride", JOURNAL OF THE AMERICAN CHEMICAL SOCIETY, vol. 69, no. 9, 25 September 1947 (1947-09-25), pages 2108-2110, XP009152390, ISSN: 0002-7863, DOI: 10.1021/JA01201A010
- BENOUARGHA A ET AL: "Redistribution of dichlorosilanes and dihydrosilanes. Synthesis of chloro hydridosilanes", PHOSPHORUS, SULFUR AND SILICON AND THE RELATED ELEMENTS, vol. 113, no. 1-4, 1996, pages 79-87, XP009152384, ISSN: 1042-6507, DOI: 10.1080/10426509608046380
- HASSLER, KARL ET AL.: 'The (chloromethyl) dihalosilanes X2HSiCH2Cl (X = F, Cl, Br, I): Synthesis, multinuclear NMR spectroscopy and rotational isomerism examined by Raman spectroscopy' EUROPEAN JOURNAL OF INORGANIC CHEMISTRY no. 21, 2004, pages 4259 - 4265, XP008141089
- JUNG, D.E. ET AL.: 'Si-C coupling reaction of polychloromethanes with HSiCl3 in the presence of Bu4PCl: Convenient synthetic method for bis (chlorosilyl)methanes' JOURNAL OF ORGANOMETALLIC CHEMISTRY vol. 692, no. 18, 2007, pages 3901 - 3906, XP022174518

## Description

### Technical Field

The present invention relates to a method for producing an organohalohydrosilane having a hetero substituent at an α-position of a silicon atom.

### Background Art

A halohydrosilane compound (A) represented by the general formula (1) :

H-SiR²_{c}(CR¹_{3-b}Y_{b})ₐX_{3-a-c} (1)

(wherein, R¹ each independently represents a hydrogen atom or a substituted or unsubstituted hydrocarbon group having 1 to 20 carbon atoms; R² each independently represents a substituted or unsubstituted hydrocarbon group having 1 to 20 carbon atoms; X each independently represents a halogen atom; Y represents a group selected from a halogen atom, -OR³, -NR⁴R⁵, -N=R⁶, -SR⁷ (wherein R³, R⁴, R⁵, and R⁷ each represent a hydrogen atom or a substituted or unsubstituted hydrocarbon group having 1 to 20 carbon atoms; and R⁶ represents a bivalent substituted or unsubstituted hydrocarbon group having 1 to 20 carbon atoms), a perfluoroalkyl group having 1 to 20 carbon atoms, and a cyano group (hereinafter, these may be also referred to collectively as "hetero substituent"); a is 1 or 2; b is any one of 1, 2 and 3; c is 1 or 0; and the sum of a and c does not exceed 2) is a unique silane compound characterized by having a halogen substituent, a hydrosilyl group, and a hydrocarbon group having a hetero substituent at an α-position (hereinafter, may be also referred to as heteromethyl group) on a silicon atom. The halogen substituent is a hydrolyzable group, and yields silanol upon hydrolysis and can form a siloxane bond by further subjected to a silanol condensation reaction. In addition, the hydrosilyl group can not only act as a hydrolyzable group, but also add to olefin or the like by a hydrosilylation reaction. The heteromethyl group included as another substituent can serve as, for example, in the case of a halomethyl group such as chloromethyl group, a Grignard reactant by way of a reaction with metal magnesium, and also has a characteristic feature capable of converting into other substituent by a nucleophilic substitution reaction. Furthermore, due to having a hetero substituent in the vicinity of a silicon atom (α-position), an inductive effect caused by the difference in electronegativity of hetero substituent and carbon atom affects also other substituent on the silicon atom, and thus an effect of enhancing reactivity of the hydrolyzable group may be achieved.

In an example of use of this halohydrosilane compound (A), a reactive silicon group-containing polymer may be obtained by adding a halohydrosilane compound (A) to a polymer having a vinyl group by a hydrosilylation reaction. As is disclosed in Patent Document 1 and the like, the reactive silicon group-containing polymer has a property of forming a siloxane bond through a reaction of the reactive silicon group by means of moisture, etc., whereby the polymer is crosslinked to give a cured product. The reactive silicon group-containing polymer obtained using a halohydrosilane compound (A) is expected to exhibit a high activity. Additionally, in another example of use, a halohydrosilane compound (A) is converted into an alkoxysilane compound that has milder hydrolyzability and more favorable handlability, and thus a reactive silicon group-containing polymer is obtained similarly to the example described above.

Although a halohydrosilane compound (A) has such very unique characteristic features, and is envisaged to be applicable in versatile fields, there exist very few examples of production so far due to difficulty in production.

One problem in production is that a halohydrosilane compound (A) has both a halogen substituent and a hydrosilyl group on a silicon atom. As a method for producing a silane compound (halohydrosilane) having both a halogen substituent and a hydrosilyl group on a silicon atom, a method basically using a direct process proposed by E. G. Rochow, *et al*. to produce HSiCH₃Cl₂, HSi(CH₃)₂Cl and the like (Nonpatent Document 1), or a method in which HSiCl₃ obtained by allowing metal silicon and hydrogen chloride to react is used as a starting material is exemplified. In other words, the method allows these starting materials to react with an organic metal reagent, thereby converting chlorine into an organic group (referred to as "method (1)"). However, to synthesize various types of halohydrosilanes is difficult since it is necessary to selectively substitute only a part of chlorine atoms. Additionally, elimination of hydrosilyl groups may occur depending on reaction conditions. Still further, to obtain the heteromethyl group-containing halohydrosilane of the present invention by the method (1) is not only difficult in terms of the synthesis but also industrially disadvantageous since it is necessary to use a metal reactant such as, for example, chloromethyl lithium, which is very unstable and must be handled at an extremely low temperature.

Under such circumstances, a partial reduction method in which chlorine of an organotrichlorosilane, organodichlorosilane or the like is partially substituted with hydrogen (referred to as "method (2)") was proposed in Patent Document 2, Nonpatent Document 2, and the like. Although an organomonochlorosilane (R₂SiClH) is successfully synthesized from an organodichlorosilane (R₂SiCl₂) in many cases according to this method, there are just few examples of successfully synthesizing an organodichlorosilane (RSiCl₂H) from an organotrichlorosilane (RSiCl₃). Moreover, it is difficult to control the reactivity since a hydride reducing agent is used, leading to high possibility of reducing the chloromethyl group to give a methyl group by a mechanism as disclosed in, for example Nonpatent Document 3, in order to obtain the heteromethyl group-containing halohydrosilane of the present invention.

As an alternative method, a partial chlorination method of a polyhydrosilane (referred to as "method (3)") was proposed in Patent Document 3, and the like. This method can be industrially disadvantageous due to increased steps for hydrogenation of an organotrichlorosilane once, followed by chlorination again in order to obtain an organotrihydrosilane as a starting material.

Alternative methods of producing halohydrosilane compounds are disclosed in the following documents: Eur. J. Inorg. Chem., 2004, 4259-4265; Spectrochimica Acta Part A, molecular and biomolecular spectroscopy, 2002, 58, 1839-1852; J. Am. Chem. Soc., 1955, 77, 907-908; J. Organomet. Chem., 1991, 249-260; and Chem. Comm., 1975, 985-986.

Methods of producing hydrosilanes are disclosed in: J. Am. Chem. Soc., 1947, 2108-2110; Phosphorous, Sulfur and Silica and the related elements, 1996, 79-87; US-A-5,965,762; US-A-5, 654, 459; EP-A-0 652 221; and US-A-4, 096, 161.

### Prior Art Documents

### Patent Document

Patent Document 1: JP-A No. 852-73998
Patent Document 2: JP-8 No. S55-34798
Patent Document 3: JP-A No. H5-239073

### Nonpatent Document

Nonpatent Document 1: "J. Am. Chem. Soc.", 1945, volume 67, page 1772
Nonpatent Document 2: "J. Organometal Chem.", volume 18, page 371
Nonpatent Document 3: "J. Organometal Chem.", volume 30, page 349

### DISCLOSURE OF THE INVENTION

### Problems to be Solved by the Invention

From the reasons as described above, to synthesize a heteromethyl group-containing halohydrosilane is very difficult, and there exist only several examples of synthesis such as an example of synthesis of chloromethyldichlorosilane by allowing trichloromethane to react with diazomethane, etc., as shown in INORGANIC SYNTHESES., 6, 37 (1960), and the like. However, diazomethane is a very dangerous chemical substance, and particular attention is required for handling. In addition, the present invention provides a method for producing a polymer having a heteromethyl group-substituted reactive silyl group in an industrially advantageous manner.

### Means for Solving the Problems

The present inventors elaborately investigated for solving the foregoing problems, and consequently accomplished the invention as in the following.

More specifically, a first aspect of the present invention provides a method for producing (A) a halohydrosilane compound represented by the general formula (1) :

H-SiR²_{c}(CR¹_{3-b}Y_{b})ₐX_{3-a-c} (1)

(wherein, R¹ each independently represents a hydrogen atom or a substituted or unsubstituted hydrocarbon group having 1 to 20 carbon atoms; R² each independently represents a substituted or unsubstituted hydrocarbon group having 1 to 20 carbon atoms; X each independently represents a halogen atom; Y represents a group selected from a halogen atom, -OR³, -NR⁴R⁵, -N=R⁵, -SR⁶ (wherein R³, R⁴, R⁵, and R⁷ each represent a hydrogen atom or a substituted or unsubstituted hydrocarbon group having 1 to 20 carbon atoms; and R⁶ represents a bivalent substituted or unsubstituted hydrocarbon group having 1 to 20 carbon atoms), a perfluoroalkyl group having 1 to 20 carbon atoms, and a cyano group; a is 1 or 2; b is any one of 1, 2 and 3; c is 1 or 0; and the sum of a and c does not exceed 2),
the method including allowing (B) a halosilane compound represented by the general formula (2) :

SiR²_{c}(CR¹_{3-b}Y_{b})ₐX_{4-a-c} (2)

(wherein, R¹, R², X, Y, a, b and c are as defined above) to react with (C) a hydrosilane compound.

A second aspect of the present invention provides the method for producing a silane compound according to the first aspect, wherein X is a chloro group.

A third aspect of the present invention provides the method for producing a silane compound according to the first or second aspect, wherein Y is a halogen atom.

A fourth aspect of the present invention provides the method for producing a silane compound according to any one of the first to third aspects, wherein the halohydrosilane compound (A) is chloromethyldichlorosilane (ClCH₂SiCl₂H).

A fifth aspect of the present invention provides the method for producing a silane compound according to any one of the first to fourth aspects, wherein the hydrosilane compound (C) is (C1) a monohydrosilane compound having only one hydro group on one silicon atom.

A sixth aspect of the present invention provides the method for producing a silane compound according to the fifth aspect, wherein the monohydrosilane compound (C1) is a compound represented by the general formula (3):

H-SiR⁸_{g}Z_{3-g} (3)

(wherein, R⁸ each independently represents a group selected from a substituted or unsubstituted hydrocarbon group having 1 to 20 carbon atoms, and R⁹₃SiO- (wherein R⁹ each independently represents a substituted or unsubstituted hydrocarbon group having 1 to 20 carbon atoms); Z each independently represents a group selected from a halogen atom, an alkoxy group, and an aryloxy group; and g is any one of 1, 2 and 3).

A seventh aspect of the present invention provides the method for producing a silane compound according to the fifth aspect, wherein the hydrosilane compound (C) is methyldichlorosilane.

An eighth aspect of the present invention provides the method for producing a silane compound according to the sixth aspect, wherein g in the general formula (3) is 3.

A ninth aspect of the present invention provides the method for producing a silane compound according to any one of the first to fourth aspects, wherein the hydrosilane compound (C) is (C2) an arylhydrosilane compound represented by the general formula (4):

H_{d}SiR¹⁰ₑR¹¹_{4-d-e} (4)

(wherein, R¹⁰ each independently represents a substituted or unsubstituted aromatic hydrocarbon group; R¹¹ each independently represents a group selected from a substituted or unsubstituted aliphatic hydrocarbon group having 1 to 20 carbon atoms, a halogen atom, an alkoxy group, and an aryloxy group; d is any one of 1, 2 and 3; e is any one of 1, 2 and 3; and the sum of d and e does not exceed 4).

A tenth aspect of the present invention provides the method for producing a silane compound according to the ninth aspect, wherein d is 1.

An eleventh aspect of the present invention provides the method for producing a silane compound according to the ninth or tenth aspect, wherein e is 1 or 2.

A twelfth aspect of the present invention provides the method for producing a silane compound according to the fifth aspect, wherein the hydrosilane compound (C) is any one of phenylsilane, diphenylsilane, and dimethylphenylsilane.

A thirteenth aspect of the present invention provides the method for producing a silane compound according to any one of the first to ninth aspects, wherein at least one selected from a quaternary ammonium salt and a quaternary phosphonium salt is used as (D) a catalyst of a reaction of the halosilane compound (B) and the hydrosilane compound (C).

A fourteenth aspect of the present invention provides the method for producing a silane compound according to the thirteenth aspect, wherein the catalyst (D) is any one of a tetrabutylammonium salt and a methyltributylammonium salt.

A fifteenth aspect of the present invention provides the method for producing a silane compound according to the thirteenth or fourteenth aspect, wherein the catalyst (D) is a quaternary ammonium chloride salt.

A sixteenth aspect of the present invention provides the method for producing a silane compound according to the thirteenth aspect, wherein the catalyst (D) is at least one selected from tetrabutylammonium chloride and tributylmethylammonium chloride.

A seventeenth aspect of the present invention provides the method for producing a silane compound according to any one of the first to ninth aspects, wherein an ion exchange resin is used as the catalyst (D).

An eighteenth aspect of the present invention provides the method for producing a silane compound according to the seventeenth aspect, wherein the ion exchange resin is an anion exchange resin.

A nineteenth aspect of the present invention provides the method for producing a silane compound according to the eighteenth aspect, wherein the anion exchange resin is an anion exchange resin having a substituted or unsubstituted amino group.

### Effects of the Invention

The method for producing a silane of the present invention is safe and industrially suitable. In addition, a reactive silicon group-containing polymer produced using the silane exhibits superior curability, even though a non-tin catalyst is used.

### Mode for Carrying Out the Invention

### (I) Heteromethyl Group-Containing Halohydrosilane Compound

The present invention relates to a method for producing (A) a halohydrosilane compound represented by the general formula (1):

H-SiR²_{c}(CR¹_{3-b}Y_{b})ₐX_{3-a-c} (1)

(wherein, R¹ each independently represents a hydrogen atom or a substituted or unsubstituted hydrocarbon group having 1 to 20 carbon atoms; R² each independently represents a substituted or unsubstituted hydrocarbon group having 1 to 20 carbon atoms; X each independently represents a halogen atom; Y represents a group selected from a halogen atom, -OR³, -NR⁴R⁵, -N=R⁶, -SR⁷ (wherein R³, R⁴, R⁵, and R⁷ each represent a hydrogen atom or a substituted or unsubstituted hydrocarbon group having 1 to 20 carbon atoms; and R⁶ represents a bivalent substituted or unsubstituted hydrocarbon group having 1 to 20 carbon atoms), a perfluoroalkyl group having 1 to 20 carbon atoms, and a cyano group; a is 1 or 2; b is any one of 1, 2 and 3; c is 1 or 0; and the sum of a and c does not exceed 2),
the method including allowing (B) a halosilane compound represented by the general formula (2):

SiR²_{c}(CR¹_{3-b}Y_{b})ₐX_{4-a-c} (2)

(wherein, R¹, R², X, Y, a, b and c are as defined above) to react with (C) a hydrosilane compound. This reaction is also referred to as a redistribution reaction or a proportional reaction.

The halohydrosilane compound (A) represented by the general formula (1) is characterized by having a hydrocarbon group (hereinafter, may be also referred to as "heteromethyl group") having a substituent Y on a carbon atom at a position 1, together with a hydrosilyl group and a halogen group.

X consists of a halogen substituent such as fluorine, chlorine, bromine, or iodine, and in light of availability of the source material, chlorine is preferred. When the number of X is two or more, they may be the same or different.

Illustrative examples of Y specifically include: halogen substituents such as fluorine, chlorine, bromine, and iodine; alkoxy groups such as a methoxy group, an ethoxy group, an isopropenoxy group, and a phenoxy group; nitrogen-based substituents such as a diethylamino group, a 1-piperidino group, and a methylethylketimino group; sulfur-based substituents such as a mercapto group, and a methylthio group; perfluoroalkyl groups such as a trifluoromethyl group, and a pentafluoroethyl group; a cyano group; and the like, but not limited thereto. In particular, in light of ease in introduction, Y is preferably a halogen substituent, an alkoxy group, or a nitrogen-based substituent, more preferably a halogen substituent, and particularly preferably chlorine.

Specific examples of substituent R¹ include a hydrogen atom, a methyl group, an ethyl group, a vinyl group, a phenyl group and the like, but not limited thereto. Among them, a hydrogen atom is preferred due to low effects of steric hindrance, and favorable availability.

Specific examples of substituent R² include a methyl group, an ethyl group, a vinyl group, a phenyl group and the like, but not limited thereto. Among these, a methyl group is preferred due to low effects of steric hindrance, and favorable availability.

Although a is 1 or 2, it is more preferably 1 in light of availability.

Although b is any one of 1, 2 and 3, it is more preferably 1 in light of ease in introduction of Y, and availability of the halosilane (B).

Although c is 0 or 1, it is more preferably 0 in light of availability.

Illustrative examples of the halohydrosilane (A) obtained by the method for producing a silane compound of the present invention specifically include chloromethyldichlorosilane (HSi(CH₂Cl)Cl₂), dichloramethyldichlorosilane (HSi(CHCl₂)Cl₂), trichloromethyldichlorosilane (HSi(CCl₃)Cl₂), chloromethylmethylchlorosilane, (HSi(CH₂Cl)(CH₃)Cl), bis(chloromethyl)chlorosilane (HSi(CHCl₂)₂Cl), 1-chloroethyldichlorosilane (HSi(CH₂ClCH₃)Cl₂), fluoromethyldifluorasilane (HSi(CH₂F)F₂), bromomethyldibromosilane (HSi(CH₂Br)Br₂), iodomethyldiiodosilane (HSi(CH₂I)I₂), 1-bromobenzyldibromosilane (HSi(CHBrC₆H₅)Br₂), methoxymethyldichlorosilane (HSi(CH₂OCH₃)Cl₂), ethoxymethyldichlorosilane (Hsi(CR₂OC₂H₅)Cl₂), N,N-diethylaminomethyldichlorosilane (HSi(CH₂N(C₂H₅)₂)Cl₂), piperidinomethyldichlorosilane (HSi(CH₂N(CH₂)₅)Cl₂), mercaptomethyldichlorosilane (HSi(CH₂SH)Cl₂) and the like, but not limited thereto.

Illustrative examples of the halosilane compound (B) used in the method for producing a silane compound of the present invention specifically include chloromethyltrichlorosilane (Si(CH₂Cl)Cl₃), dichloromethyltrichlorosilane (Si(CHCl₂)Cl₃), trichloromethyltrichlorosilane (Si(CCl₃)Cl₃), chloromethylmethyldichlorosilane, (Si(CH₂Cl)(CH₃)Cl₂), bis(chloromethyl)dichlorosilane (Si(CHCl₂)₂Cl₂), 1-chloroethyltrichlorosilane (Si(CH₂ClCH₃)Cl₃), fluoromethyltrifluorosilane (Si(CH₂F)F₃), bromomethyltribromosilane (Si(CH₂Br)Br₃), iodomethyltriiodosilane (Si(CH₂I)I₃), 1-bromobenzyltribromosilane (Si(CHBrC₆H₅)Br₃), methoxymethyltrichlorosilane (Si(CH₂OCH₃)Cl₃), ethoxymethyltrichlorosilane (Si(CH₂OC₂H₅)Cl₃), N,N-diethylaminomethyltrichlorosilane (Si(CH₂N(C₂H₅)₂)Cl₃), piperidinomethyltrichlorosilane (Si(CH₂N(CH₂)₅)Cl₃), mercaptomethyltrichlorosilane (Si(CH₂SH)Cl₃) and the like, but not limited thereto. In light of availability, chloromethyltrichlorosilane, dichloromethyltrichlorosilane, chloromethylmethyldichlorosilane, 1-chloroethyltrichlorosilane and bromomethyltribromosilane are more preferred, and chloromethyltrichlorosilane is particularly preferred.

The hydrosilane compound (C) used in the method for producing a silane compound of the present invention is not particularly limited, and various types of compounds containing Si-H may be used. Specific examples of the hydrosilane (C) include organomonohydrosilanes such as diethylmethylsilane, triethylsilane, phenyldimethylsilane, tripropylsilane, diphenylmethylsilane, triphenylsilane, and trihexylsilane; organodihydrosilanes such as phenylmethylsilane, diphenylsilane, 1,1,3,3-tetramethyldisiloxane, and 1,1,3,3-tetramethyldisilazane; organotrihydrosilanes such as phenylsilane, and octylsilane; hydrolyzable group-containing hydrosilanes such as chlorodimethylsilane, dichloromethylsilane, dimethoxymethylsilane, ethoxydimethylsilane, dimethoxymethylsilane, triethoxysilane, and triisopropenoxysilane, as well as 1,3,5,7-tetramethylcyclotetrasiloxane (D4H), 1,3,5,7,9-tetramethylcyclopentasiloxane (D5H), methylhydrogenopolysiloxane (H oil), and the like.

The hydrosilane (C) is used for selectively substituting one Si-X group in the halosilane (B) with Si-H; however, not only a monohydrogenated product, but a dihydrogenated product and/or a trihydrogenated product may be yielded (side reaction (1)). In addition, the hetero substituent at an α-position of the halosilane (B) may be substituted with a hydro group (reduced) (side reaction (2)). In an illustrative side reaction, it is probable to form chloromethylchlorosilane (ClCH₂SiClH₂) and/or chloromethylsilane (ClCH₂SiH₃) by the side reaction (1), when obtaining chloramethyldichlorosilane (ClCH₂SiCl₂H) is intended using chloromethyltrichlorosilane (ClCH₂SiCl₃). Also, according to the side reaction (2), it is probable to form methyltrichlorosilane (CH₃SiCl₃) and/or methyldichlorosilane (CH₃SiCl₂H).

In the present invention, (C1) a monohydrosilane compound having only one hydro group on one silicon atom is preferably used as the hydrosilane (C) in order to selectively obtain the halohydrosilane (A). Specific examples of such a hydrosilane (C1) include chlorodimethylsilane, ethoxydimethylsilane, dichloromethylsilane (HSi(CH₃)Cl₂), dimethoxymethylsilane, diethylmethylsilane, triethylsilane, tripropylsilane, dichlorophenylsilane, phenyldimethylsilane, diphenylmethylsilane, 1,1,3,3-tetramethyldisiloxane, 1,1,3,3-tetramethyldisilazane, 1,1,3,3,5,5-hexamethyltrisiloxane, D4H, D5H, H oil, and the like, but not limited thereto. Among these, dichloromethylsilane, triethylsilane, phenyldimethylsilane, D4H, H oil are preferred due to having high activities, and dichloromethylsilane is particularly preferred in light of availability.

Also, the monohydrosilane compound (C1) represented by the general formula (3):

H-SiR⁸_{g}Z_{3-g} (3)

(wherein, R⁸ each independently represents a group selected from a substituted or unsubstituted hydrocarbon group having 1 to 20 carbon atoms, and R⁵₃SiO- (wherein R⁹ each independently represents a substituted or unsubstituted hydrocarbon group having 1 to 20 carbon atoms); Z each independently represents a group selected from a halogen atom, an alkoxy group, and an aryloxy group; and g is any one of 1, 2 and 3) is preferred since the side reaction (1) is likely to be suppressed.

Because the side reaction (2) tends to be suppressed, the monohydrosilane (C1) in which g in the general formula (3) is 3 is preferably used. Specifically, illustrative examples include triethylsilane, tripropylsilane, tributylsilane, trihexylsilane, phenyldimethylsilane, diphenylmethylsilane, 1,1,1,3,5,5,5-heptamethyltrisiloxane, tris(trimethylsiloxy)silane, and the like, but not limited thereto. Of these, triethylsilane, and phenyldimethylsilane are preferred owing to favorable handlability.

Also, (C2) an arylhydrosilane compound represented by the general formula (4):

H_{d}SiR¹⁰R¹¹_{4-d-e} (4)

(wherein, R¹⁰ each independently represents a substituted or unsubstituted aromatic hydrocarbon group; R¹¹ each independently represents a group selected from a substituted or unsubstituted aliphatic hydrocarbon group having 1 to 20 carbon atoms, a halogen atom, an alkoxy group, and an aryloxy group; d is any one of 1, 2 and 3; e is any one of 1, 2 and 3; and the sum of d and e does not exceed 4) is preferably used as the hydrosilane (C) since a high reactivity is likely to be attained. Specifically, illustrative examples of the arylhydrosilane (C2) include phenylsilane, chlorophenylsilane (C₆H₅SiClH₂), dichlorophenylsilane (C₆H₅SiCl₂H), phenylmethylsilane, phenyldimethylsilane, diphenylsilane, diphenylmethylsilane, triphenylsilane, triflylsilane and the like, but not limited thereto. Since the halohydrosilane (A) as intended is likely to be obtained selectively, d is preferably 1. Since a high reactivity is likely to be attained, e is preferably 1 or 2.

Due to availability and ease in handling, dichloromethylsilane, phenylsilane, diphenylsilane, triethylsilane, phenyldimethylsilane, diphenylmethylsilane, D4H, or H oil is preferably used. Dichloromethylsilane is particularly preferred since it is available at low costs, and has high reactivity. Phenyldimethylsilane is particularly preferred since it is highly reactive and enables the side reaction to be easily controlled, and can provide the halohydrosilane (A)in high yield.

With respect to the hydrosilane (C) used in the method for producing a silane compound of the present invention, the difference in boiling points of the obtained halohydrosilane (A) and (C') a halosilane compound generated as a by-product by halogenation of the hydrosilane (C) resulting from the reaction is preferably not lower than 4°C, more preferably not lower than 10°C, and particularly preferably not lower than 15°C. In addition, the hydrosilane (C) has a boiling point of preferably not lower than 40°C. When the boiling point is low, the reaction temperature cannot be elevated enough, and thus the reaction does not sufficiently proceed, or the reaction time period tends to be lengthened. Moreover, the halosilane (C') preferably has a higher boiling point than the halohydrosilane (A) since purification of the halohydrosilane (A) is facilitated.

Furthermore, when (B') a hydrosilane obtained by substitution of a halogen substituent X of the halosilane (B) with hydrogen is used as the hydrosilane (C), product types in the resulting reaction mixture can be reduced, whereby the purification is facilitated, and in addition, the yield of the product can be elevated. For example, chloromethyltrichlorosilane may be reacted with chloromethyltrihydrosilane.

The amount of the hydrosilane (C) is such that the amount of Si-H included in the hydrosilane (C) is preferably from 0.1 molar equivalents to 5 molar equivalents, more preferably from 0.5 to 3 molar equivalents, and particularly preferably from 0.8 to 1.2 molar equivalents relative to the halosilane (B). When the amount of the hydrosilane (C) is small, the amount of the obtained halohydrosilane (A) is decreased. Additionally, when the amount of the hydrosilane (C) is large, the amount of by-products generated due to a side reaction is increased, whereby the yield of the halohydrosilane (A) may be lowered.

In the reaction of the halosilane (B) and the hydrosilane (C) of the present invention, (D) a catalyst is used. Illustrative examples of the catalyst (D) specifically include: halogenated quaternary ammonium salts such as tetrabutylammonium fluoride, tetrabutylammonium chloride, tetrabutylammonium bromide, tetrabutylammonium iodide, tributylmethylammonium chloride, tetraethylammonium chloride, benzyltributylammonium chloride, benzyltrimethylammonium chloride, phenyltrimethylammonium chloride, and methyltrioctylammonium chloride; quaternary phosphonium salts such as tetrabutylphosphonium chloride, and tetrabutylphosphonium bromide; tertiary amines such as tripropylamine, triisopropylamine, tributylamine, octyldimethylamine, and triphenylamine; ion exchange resins like weakly basic anion exchange resins such as Amberlyst A21 (manufactured by Organo Corporation), and Diaion(R) WA30 (manufactured by Mitsubishi Chemical Corporation); strongly basic anion exchange resins such as Amberlite IRA900JCL (manufactured by Organo Corporation), and Diaion(R) SA10A (manufactured by Mitsubishi Chemical Corporation); strongly acidic cation exchange resins such as Amberlyst 15JS-HG (manufactured by Organo Corporation), and Diaion(R) PK216 and Diaion(R) SK112 (manufactured by Mitsubishi Chemical Corporation); aminophosphoric acid group-containing ion exchange resins such as DUOLITE (R) C467 (manufactured by Sumika Chemtex Co., Ltd.); carriers to which a tertiary amino group or a quaternary ammonium group is covalently bound as disclosed in JP-A No. H6-9656; boron trifluoride, boron trichloride, aluminum trichloride, zirconium tetrachloride, KAlCl₄, Curl, H₃BO₃, tris(dimethylamino)phosphine oxide, and the like, but not particularly limited thereto.

Of these, quaternary ammonium salts, and quaternary phosphonium salts are more preferable in light of the catalytic activity since many of these dissolve in a silane compound to form a homogenous system, and tetrabutylammonium chloride and tributylmethylammonium chloride are more preferred. In light of availability, tributylmethylammonium chloride is particularly preferred.

When a homogenous catalyst is used as the catalyst (D), it is preferably used in the range of preferably from 1 to 0.001 molar equivalents, more preferably from 0.5 to 0.005 molar equivalents, and particularly preferably from 0.3 to 0.007 molar equivalents relative to the halosilane compound (B). When the amount of the catalyst is below this range, a long period of time is required for the reaction, or the reaction may not proceed at all. When the amount is beyond this range, selectivity of the reaction may be lowered, and economical disadvantages may be obliged.

On the other hand, solid catalysts such as ion exchange resins have advantages of ease in removal of the catalyst after the reaction, controllability of side reactions, and ease in repeated use. Functional groups which may be included in the weakly basic anion exchange resin are exemplified by substituted or unsubstituted amino groups such as an amino group and a dimethylamino group. Functional groups which may be included in the strongly basic anion exchange resin are exemplified by a trimethylammonium chloride group (-N(CH₃)₃⁺Cl⁻). Functional groups which may be included in the strongly acidic cation exchange resin are exemplified by a sulfonic acid group (-SO₃H), a sulfonic acid sodium salt (-SO₃Na) and the like. Among the ion exchange resins, weakly basic anion exchange resins having a substituent amino group such as a dimethylamino group as a functional group like Amberlyst A21, and Diaion(R) WA30 are more preferred due to having a high activity, and Amberlyst A21 is particularly preferred.

When a non-homogenous catalyst is used as the catalyst (D), the amount thereof is not particularly limited, but at least 0.01 g is preferably used relative to 1 mmol of the halosilane compound (B).

According to the method for producing the silane compound (A) of the present invention, the temperature in the reaction is not especially defined, but falls within the range of preferably from 20°C to 110°C, and more preferably from 50°C to 100°C. When the reaction temperature is lower than this range, the reaction tends to proceed slowly. Furthermore, when the reaction temperature is higher than this range, the reactivity is improved but the rate of generation of by-products by the aforementioned side reaction is likely to increase.

As described above, when the rate of generation of by-products by the side reaction increases in the method for producing a silane compound of the present invention, the yield of the intended halohydrosilane (A) is lowered. Unreacted halosilane (B) as well as dihydrogenated products and trihydrogenated products obtained by the side reaction (1) can be used again as a source material, or can be comparatively readily reused by subjecting to halogenation. On the other hand, it is difficult to reuse products reduced at the α-position yielded in the side reaction (2), and purification of the halohydrosilane (A) may be difficult since the reduced products have the same molecular weight as the intended halohydrosilane (A). Therefore, suppression of the side reaction (2) as far as possible is preferred in the method for production of the present invention.

For suppressing the side reaction (2), selection of the hydrosilane (C), and adjustment of the reaction temperature conditions as described above work effectively. In addition to these processes, a process in which the reaction situation is traced in a timely manner to detect generation of the by-product by the side reaction (2) at an early stage, and then the reaction is interrupted also works effectively. More specifically, lowering of the yield of the halohydrosilane (A) can be suppressed by interrupting the reaction when the percentage, in the total amount of the halosilane (B) and the products derived from the halosilane (B), of the total amount of (K) a silane compound represented by the general formula (8):

H_{f}-Si(CR¹_{3-b}H_{b})ₐX_{4-a-f} (8)

(wherein, R¹, X, Y, a, and b are as defined above; f is any one of 0, 1, 2 and 3; and the sum of a and f does not exceed 4) yielded by the reaction of the halosilane (B) and the hydrosilane (C) exceeds a predetermined value. It is preferred that the reaction is interrupted before the percentage of the total amount of the silane (K) in the total amount of the halosilane (B) and products derived from the halosilane (B) exceeds preferably 30%, and more preferably 15%.

Although the method for tracing the reaction is not particularly limited, various processes such as a GC determination or an NMR determination may be used. Since there is a case in which the molecular weight of the halohydrosilane (A) becomes the same as that of the silane (K), a ¹H-NMR determination is effectively used.

It is preferred to terminate the reaction at an appropriate reaction time by tracing the reaction, but the reaction time is preferably at least 10 min and shorter than 24 hrs, more preferably at least 0.5 hrs and shorter than 5 hrs, and particularly preferably at least 0.5 hrs and shorter than 3 hrs.

Although the atmosphere in which the reaction is carried out is not particularly limited, in order to suppress lowering of the reaction yield resulting from a hydrolysis reaction caused with the halosilane (B) and the hydrosilane (C) used as source materials, and the halohydrosilane compound (A) to be produced, it is preferable to carry out the reaction under a condition including a lower amount of water, and carrying out the reaction in an atmosphere of dry air, nitrogen, argon or the like is preferred. Further, not only a reaction vessel such as a glove box, but an apparatus which can maintain a dry condition even during handling of the source materials and also during storage may be preferably used.

Moreover, according to the method for production of the present invention, the halosilane (C') generated as a by-product may be regenerated to give the hydrosilane (C) by other reaction, and can be used for the production again. As the method for hydrogenation, hydrogen reduction, hydride reduction, redistribution with hydrosilane, and the like may be employed.

The halohydrosilane (A) produced according to the present invention may be used for a hydrosilylation reaction utilizing Si-H, hydrolysis utilizing Si-X, a condensation reaction, and the like as described above. Si-X can be further converted into other hydrolyzable silyl group such as an alkoxysilyl group, an aminosilyl group, etc. Moreover, the heteromethyl group of the halohydrosilane (A) can be used in converting into other substituent, or can enhance the reactivity of the hydrolyzable group on the silicon atom.

Specific use of the halohydrosilane (A) is illustratively shown below, but not limited thereto. (1) The halohydrosilane (A) is added to an unsaturated group-containing compound by a hydrosilylation reaction to obtain a reactive silicon group-containing compound that is highly hydrolyzable. For example, chloromethyldichlorosilane is added to allyl chloride by hydrosilylation, thereby capable of obtaining 3-chloropropyl(chloromethyl)dichlorosilane. This product can be used as a silane coupling agent, generally referred to, having both a hydrolyzable silicon group and other reactivity group, and as a source material of such a silane coupling agent. Since thus obtained silane coupling agent has a heteromethyl group on the silicon atom, it is believed to exhibit higher hydrolyzability. Also, the unsaturated group-containing compound may be a compound having a high molecular weight. For example, when the halohydrosilane (A) produced according to the present invention is used in introduction of a reactive silicon group of a reactive silicon group-containing organic polymer as disclosed in JP-A No. S52-73998 and the like, a reactive silicon group-containing organic polymer having very high reactivity can be obtained. Moreover, by alkoxidizing Si-X of the obtained polymer, handlability can be improved. (2) After a hydrolyzable silicon group-containing compound obtained in a similar manner to (1) is converted into a siloxane compound by a hydrolysis and condensation reaction, a halomethyl group is converted into a desired substituent by a nucleophilic substitution reaction or the like (e.g., a chloromethyl group may be converted into a diethylaminomethyl group). (3) The halohydrosilane (A) is allowed to react with methanol and/or trimethyl orthoformate to convert Si-X into an alkoxysilyl group, thereby obtaining a heteromethyl group-containing alkoxyhydrosilane compound. Thus obtained silane compound has improved handlability, and can be used in hydrosilylation reactions.

The use of Si-H, Si-X, and the heteromethyl group of the halohydrosilane (A) may be carried out in any order.

### EXAMPLES

Next, the present invention is specifically explained by way of Examples and Comparative Examples, but the present invention is not limited thereto.

### (Reference Example 1)

For the purpose of producing chloromethyldichlorosilane (ClCH₂SiCl₂H), to a 0.5 mol/L THF solution of chloromethyltrichlorosilane (LS-30, manufactured by Shin-Etsu Chemical Co., Ltd.) was added Red-Al (hydrogenated bis(2-methoxyethoxy)aluminum sodium, manufactured by Wako Pure Chemical Industries, Ltd.) in an amount of 0.5 molar equivalents relative to LS-30 at -68°C, and the temperature of the mixture was slowly elevated to room temperature over about 1 hour while stirring sufficiently. The reaction product was analyzed by ¹H-NMR measurement (measured in a CDCl₃ solvent using an Avance III 400 MHz NMR system manufactured by Bruker, and analyzed assuming that the peak representing CHCl₃ appears at 7.26 ppm). Consequently, the spectrum was complicated, and the peak representing the intended chloromethyldichlorosilane was not observed, but a peak representing methylsilane yielded by reduction of a chloromethyl group was observed.

### (Reference Example 2)

Operations similar to Reference Example 1 were carried out except that a 1.0 mol/L hexane solution of DIBAL-H (hydrogenated diisobutyl aluminum, manufactured by Tokyo Chemical Industry Co., Ltd.) in an amount of 1.0 molar equivalent was added in place of Red-Al at room temperature. As a result of analysis of the reaction products with a ¹H-NMR determination, the reaction hardly proceeded, and peaks representing chloromethylchlorosilane and chloromethylsilane were only slightly observed. After this reaction solution was further heated to 65°C and the reaction was allowed for 3 hrs, a ¹H-NMR determination was carried out, but the spectrum scarcely altered.

### (Examples 1 to 17)

Chloromethyltrichlorosilane, the hydrosilane compound (C) and tetrabutylammonium chloride as shown in Table 1 were weighed into a glass reaction vessel in a glove box in which the moisture was set to be not greater than 0.1 ppm, and the vessel was closed with an airtight stopper. The reaction vessel was allowed standing under each temperature condition, and the reaction situation was confirmed by a ¹H-NMR determination. Peak assignment of the product derived from the obtained chloromethyltrichlorosilane on the ¹H-NMR spectrum is as in the following: chloromethyltrichlorosilane (2H: 3.29 ppm (singlet)); chloromethyldichlorosilane (2H: 3.29 ppm (doublet), 1H: 5.56 ppm (triplet)); chloromethylchlorosilane (2H: 3.14 ppm (triplet), 2H: 4.80 ppm (triplet)); chloromethylsilane (2H: 3.00 ppm (quartet), 3H: 3.83 ppm (triplet)); methyltrichlorosilane (3H: 1.14 ppm (singlet)); methyldichlorosilane (3H: 0.89 ppm (doublet), 1H: 5.59 ppm (quarter)); methylchlorosilane (3H: 0.61 ppm (triplet), 2H: 4.76 ppm (quartet)); and methylsilane (3H: 0.19 ppm (quartet), 3H: 3.58 ppm (quartet)).

**[Table 1]**

| | Halosilane (B) | | Hydrosilane (C) | | Catalyst (D) | | Reaction temperature | Reaction time |
|---|---|---|---|---|---|---|---|---|
| | Compound name | Amount charged | Compound name | Amount charged | Compound name | Amount charged | | |
| Ex. 1 | ClCH₂SiCl₃ ⁽¹⁾ | 1 mmol | Et₃SiH ⁽²⁾ | 1 mmol | TBACl ⁽⁶⁾ | 0.01 mmol | 80°C | 6 hrs |
| Ex. 2 | ClCH₂SiCl₃ | 1 mmol | Et₃SiH | 1 mmol | TBACl | 0.01 mmol | 80°C | 24 hrs |
| Ex. 3 | ClCH₂SiCl₃ | 27 mmol | Et₃SiH | 26 mmol | TBACl | 0.18 mmol | 80°C | 20 hrs |
| Ex. 4 | ClCH₂SiCl₃ | 27 mmol | Et₃SiH | 26 mmol | TBACl | 0.18 mmol | 80°C | 4 days |
| Ex. 5 | ClCH₂SiCl₃ | 1 mmol | Et₃SiH | 1 mmol | TBACl | 0.01 mmol | 100°C | 1 hrs |
| Ex. 6 | ClCH₂SiCl₃ | 1 mmol | Et₃SiH | 1 mmol | TBACl | 0.01 mmol | 100°C | 4 hrs |
| Ex. 7 | ClCH₂SiCl₃ | 1 mmol | Et₃SiH | 1 mmol | TBACl | 0.01 mmol | 100°C | 6 hrs |
| Ex. 8 | ClCH₂SiCl₃ | 1 mmol | Et₃SiH | 1 mmol | TBACl | 0.01 mmol | 100°C | 24 hrs |
| Ex. 9 | ClCH₂SiCl₃ | 1 mmol | DH₄ ⁽³⁾ | 0.25 mmol | TBACl | 0.01 mmol | 80°C | 2.5 hrs |
| Ex. 10 | ClCH₂SiCl₃ | 1 mmol | DH₄ | 0.25 mmol | TBACl | 0.01 mmol | 80°C | 18 hrs |
| Ex. 11 | ClCH₂SiCl₃ | 27 mmol | DH4 | 6.67 mmol | TBAC1 | 0.18 mmol | 80°C | 2 hrs |
| Ex. 12 | ClCH₂SiCl₃ | 1 mmol | DH4 | 0.25 mmol | TBACl | 0.01 mmol | 90°C | 2 hrs |
| Ex. 13 | ClCH₂SiCl₃ | 1 mmol | H oil ⁽⁴⁾ | 0.06 g | TBACl | 0.01 mmol | 80°C | 2.5 hrs |
| Ex. 14 | ClCH₂SiCl₃ | 1 mmol | H oil | 0.06 g | TBACl | 0.01 mmol | 80°C | 18 hrs |
| Ex. 15 | ClCH₂SiCl₃ | 1 mmol | H oil | 0.06 g | TBACl | 0.01 mmol | 90°C | 2 hrs |
| Ex. 16 | ClCH₂SiCl₃ | 1 mmol | PhME₂SiH ⁽⁵⁾ | 1 mmol | TBACl | 0.01 mmol | 90°C | 2 hrs |
| Ex. 17 | ClCH₂SiCl₃ | 1 mmol | PhMe₂SiH | 1 mmol | TBACl | 0.01 mmol | 90°C | 17 hrs |

| | | | | | | | | |
|---|---|---|---|---|---|---|---|---|
| (1): manufactured by Shin-Etsu Chemical Co., Ltd., LS30 (chloromethyltrichlorosilane) (2): manufactured by Shin-Etsu Chemical Co., Ltd., LS1320 (triethylsilane) (3): manufactured by Shin-Etsu Chemical Co., Ltd., LS8600 (1,3,5,7-tetramethylcyclotetrasiloxane) (4): manufactured by Momentive Performance Materials Japan Inc., TSF484 (methylhydrogenpolysiloxane) (5): manufactured by Shin-Etsu Chemical Co., Ltd., LS2010 (dimethylphenylsilane) (6) : manufactured by Wako Pure Chemical Industries, Ltd., tetrabutylammonium chloride | | | | | | | | |

Table 2 shows yielding ratio of each product derived from chloromethyltrichlorosilane drawn from the determined ¹H-NMR spectrum. Note that the indication of "-" in Table below means that the integration ratio in the ¹H-NMR spectrum is less than 1.

**[Table 2]**

| | Reaction product (molar ratio) | | | | | | |
|---|---|---|---|---|---|---|---|
| | ClCH₂SiCl₃ | ClCH₂SiCl₂H | ClCH₂SiClH₂ | ClCH₂SiH₃ | CH₃SiCl₃ | CH₃SiCl₂H | CH₃SiClH₂ |
| Ex. 1 | 77 | 23 | - | - | - | - | - |
| Ex. 2 | 27 | 53 | 13 | 1 | 4 | 2 | - |
| Ex. 3 | 57 | 38 | 3 | - | - | - | - |
| Ex. 4 | 32 | 46 | 7 | - | 10 | 4 | - |
| Ex. 5 | 93 | 7 | - | - | - | - | - |
| Ex. 6 | 49 | 44 | 3 | 3 | - | - | - |
| Ex. 7 | 35 | 48 | 6 | - | 8 | 2 | - |
| Ex. 8 | 28 | 16 | 2 | - | 45 | 9 | - |
| Ex. 9 | 13 | 48 | 16 | 1 | 9 | - | - |
| Ex. 10 | 5 | 21 | 27 | 2 | 17 | 24 | 5 |
| Ex. 11 | 20 | 52 | 9 | - | 14 | 6 | 5 |
| Ex. 12 | 14 | 34 | 16 | 1 | 18 | 9 | 5 |
| Ex. 13 | 37 | 40 | 5 | - | 13 | 5 | - |
| Ex. 14 | 12 | 30 | 23 | 2 | 17 | 16 | - |
| Ex. 15 | 47 | 26 | 7 | - | 16 | 4 | - |
| Ex. 16 | 31 | 51 | 18 | 1 | - | - | - |
| Ex. 17 | 30 | 39 | 16 | 1 | 11 | 4 | - |

It is proven that each silane compound was yielded at ratios shown in the Table. When triethylsilane was used as the hydrosilane (C) (Examples 1 to 8), favorable selectivity of the monohydrogenated product was achieved. In addition, when LS8600 (Examples 9 to 12) or H oil (Examples 13 to 15) was used, high reactivity was indicated. In particular, when dimethylphenylsilane was used (Examples 16 and 17), high reactivity was indicated, and the yielding ratio of the compound having a reduced chloromethyl group was lowered. Moreover, a longer reaction time results in a greater amount of consumption of the source material even under the same reaction conditions, but in some cases, the yielding ratio of chloromethyldichlorosilane was lowered and the ratio of the by-product increased.

### (Example 18)

Into a three-necked flask equipped with a dripping funnel, a thermometer and a stirrer was weighed 1 mmol of tetrabutylammonium chloride (manufactured by Wako Pure Chemical Industries, Ltd.) under reflux, and the atmosphere in the reaction apparatus was replaced with a dry nitrogen atmosphere. From the dripping funnel were added thereto 100 mmol of chloromethyltrichlorosilane (LS-30), and 100 mmol of dimethylphenylsilane (LS-2010, manufactured by Shin-Etsu Chemical Co., Ltd.), and the reaction temperature was elevated to 90°C while the mixture was well stirred. After the reaction was allowed for 2 hrs, the yielding ratio of the silane product derived from chloromethyltrichlorosilane was confirmed by ¹H-NMR, revealing chloromethyltrichlorosilane (LS-30) of 30%, chloromethyldichlorosilane of 52%, and chloromethylchlorosilane of 18%, whereas a by-product having a reduced chloromethyl group was not observed.

### (Examples 19 to 23)

As shown in Table 3, chloromethyltrichlorosilane, the hydrosilane compound (C) and the catalyst (D) were weighed into a glass tube type reaction vessel, and the tube was sealed after devolatilization. The reaction was allowed at a temperature for a time period shown in the Table, and the ratio of the silane product derived from chloromethyltrichlorosilane of the reaction product determined by a ¹H-NMR spectrum is shown in Table 4.

**[Table 3]**

| | Halosilane (B) | | Hydrosilane (C) | | Catalyst (D) | | Reaction temperapture | Reaction time |
|---|---|---|---|---|---|---|---|---|
| | Compound name | Amount charged | Compound name | Amount charged | Compound name | Amount charged | | |
| Ex. 19 | ClCH₂SiCl₃ ⁽¹⁾ | 1 mmol | Et₃SiH ⁽²⁾ | 1 mmol | TBACl ⁽⁴⁾ | 0.01 mmol | 90°C | 4 hrs |
| Ex. 20 | ClCH₂SiCl₃ | 1 mmol | Et₃SiH | 1 mmol | TBACl | 0.01 mmol | 90°C | 8 hrs |
| Ex. 21 | ClCH₂SiCl₃ | 1 mmol | Et₃SiH | 1 mmol | TBPCl ⁽⁵⁾ | 0.01 mmol | 90°C | 2 hrs |
| Ex. 22 | ClCH₂SiCl₃ | 1 mmol | Ph₂MeSiH ⁽³⁾ | 1 mmol | TBACl | 0.01 mmol | 90°C | 2 hrs |
| Ex. 23 | ClCH₂SiCl₃ | 1 mmol | Ph₂MeSiH | 1 mmol | TBPCl | 0.01 mmol | 90°C | 2 hrs |

| | | | | | | | | |
|---|---|---|---|---|---|---|---|---|
| (1): manufactured by Shin-Etsu Chemical Co., Ltd., LS30 (chloromethyltrichlorosilane) (2): manufactured by Shin-Etsu Chemical Co., Ltd., LS1320 (triethylsilane) (3): manufactured by Gelest, SID4555.0 (methyldiphenylsilane) (4): manufactured by Wako Pure Chemical Industries, Ltd., tetrabutylammonium chloride (5): manufactured by Sigma-Aldrich Corporation, tetrabutylphosphonium chloride | | | | | | | | |

**[Table 4]**

| | Reaction product (molar ratio) | | | |
|---|---|---|---|---|
| | ClCH₂SiCl₃ | ClCH₂SiCl₂H | ClCH₂SiClH₂ | CH₃SiCl₃ |
| Example 19 | 84 | 15 | - | - |
| Example 20 | 29 | 60 | 3 | 6 |
| Example 21 | 31 | 61 | 3 | 4 |
| Example 22 | 43 | 54 | 2 | - |
| Example 23 | 23 | 65 | 7 | 3 |

As shown in Table 4, when triethylsilane was used as the hydrosilane (C), the intended substance was obtained within a short period of time by using tributylphosphonium chloride as the catalyst. In addition, when diphenylmethylsilane having a phenyl group was used as the hydrosilane (C), the intended chloromethyldichlorosilane (ClCH₂SiCl₂H) was successfully obtained at a higher ratio within a shorter period of time than the case in which triethylsilane was used. Furthermore, the intended substance was obtained at a higher ratio when tributylphosphonium chloride was used as a catalyst than the case in which tetrabutylammonium chloride was used.

### (Examples 24 to 27)

As shown in Table 5, chloromethyltrichlorosilane, dichloromethylsilane (MeSiCl₂H) , and tetrabutylammonium chloride were allowed to react under the conditions shown below. In Example 24, each component was weighed into a reaction vessel equipped with a reflux tube, and the reaction was allowed under a nitrogen stream. In Example 25, each component was weighed into an autoclave reactor, which was closed with an airtight stopper to permit the reaction. In Examples 26 and 27, each component was weighed into a glass tube type reaction vessel, which was sealed after devolatilization to permit the reaction. Table 6 shows the ratio of the products of the chloromethyl group-containing silane determined by a ¹H-NMR spectrum.

**[Table 5]**

| | Halosilane (B) | | Hydrosilane (C) | | Catalyst (D) | | Reaction temperature | Reaction time |
|---|---|---|---|---|---|---|---|---|
| | Compound name | Amount charged | Compound name | Amount charged | Compound name | Amount charged | | |
| Ex. 24 | ClCH₃SiCl₃ ⁽¹⁾ | 5 mmol | MeSiCl₂H ⁽²⁾ | 5 mmol | TBACl ⁽³⁾ | 0.05 mmol | 50°C | 3 hrs |
| Ex. 25 | ClCH₂SiCl₃ | 5 mmol | MeSiCl₂H | 5 mmol | TBACl | 0.05 mmol | 90°C | 2 hrs |
| Ex. 26 | ClCH₂SiCl₃ | 3 mmol | MeSiCl₂H | 3 mmol | TBACl | 0.03 mmol | 90°C | 2 hrs |
| Ex. 27 | ClCH₂SiCl₃ | 1 mmol | MeSiCl₂H | 2 mmol | TBACl | 0.01 mmol | 90°C | 2 hrs |

| | | | | | | | | |
|---|---|---|---|---|---|---|---|---|
| (1): manufactured by Shin-Etsu Chemical Co., Ltd., LS30 (chloromethyltrichlorosilane) (2): manufactured by Shin-Etsu Chemical Co., Ltd., LS50 (dichloromethylsilane) (3): manufactured by Wako Pure Chemical Industries, Ltd., tetrabutylammonium chloride | | | | | | | | |

**[Table 6]**

| | Reaction product (molar ratio) | | |
|---|---|---|---|
| | ClCH₂SiCl₃ | ClCH₂SiCl₂H | ClCH₂SiClH₂ |
| Example 24 | 70 | 29 | 1 |
| Example 25 | 40 | 54 | 5 |
| Example 26 | 55 | 43 | 1 |
| Example 27 | 36 | 60 | 2 |

As shown in Table 6, it was revealed that dichloromethylsilane is effective as the hydrosilane (C). The intended chloromethyldichlorosilane was obtained even at a comparatively low temperature as in Example 24, whereas the proportion of yielding the intended substance increased by elevating the reaction temperature as in Examples 25 to 27.

### (Examples 28 to 32)

As shown in Table 7, chloromethyltrichlorosilane, the hydrosilane (C), and tetrabutylammonium chloride were weighed into a glass tube type reaction vessel, which was sealed after devolatilization to permit the reaction. Table 8 shows the ratio of the silane product derived from chloromethyltrichlorosilane determined by a ¹H-NMR spectrum.

**[Table 7]**

| | Halosilane (B) | | Hydrosilane (C) | | Catalyst (D) | | Reaction temperature | Reaction time |
|---|---|---|---|---|---|---|---|---|
| | Compound name | Amount charged | Compound name | Amount charged | Compound name | Amount charged | | |
| Ex. 28 | ClCH₂SiCl₃ ⁽¹⁾ | 1 mmol | MeSiCl₂H ⁽²⁾ | 1 mmol | TBACl ⁽⁶⁾ | 0.01 mmol | 90°C | 2 hrs |
| Ex. 29 | ClCH₂SiCl₃ | 1 mmol | PhSiH₃ ⁽³⁾ | 0.3 mmol | TBACl | 0.01 mmol | 90°C | 2 hrs |
| Ex. 30 | ClCH₂SiCl₃ | 1.3 mmol | PhSiH₃ | 0.8 mol | TBACl | 0.01 mmol | 90°C | 2 hrs |
| Ex. 31 | ClCH₂SiCl₃ | 1 mmol | Ph₂SiH₂ ⁽⁴⁾ | 0.5 mmol | TBACl | 0.01 mmol | 90°C | 2 hrs |
| Ex. 32 | ClCH₂SiCl₃ | 1 mmol | PhSiCl₂H ⁽⁵⁾ | 3 mmol | TBACl | 0.01 mmol | 90°C | 2 hrs |

| | | | | | | | | |
|---|---|---|---|---|---|---|---|---|
| (1): manufactured by Shin-Etsu Chemical Co., Ltd., LS30 (chloromethyltrichlorosilane) (2): manufactured by Gelest, SID4070.0 (dimethylchlorosilane) (3): manufactured by Gelest, SID6750.0 (phenylsilane) (4): manufactured by Gelest, SID4559.0 (diphenylsilane) (5): dichlorophenylsilane: synthesized by redistribution of phenyltrichlorosilane, and dichloromethylsilane, followed by purification (6): manufactured by Wako Pure Chemical Industries, Ltd., tetrabutylammonium chloride | | | | | | | | |

**[Table 8]**

| | Reaction product (molar ratio) | | | |
|---|---|---|---|---|
| | ClCH₂SiCl₃ | ClCH₂SiCl₂H | ClCH₂SiClH₂ | CH₃SiCl₃ |
| Example 28 | 67 | 31 | - | - |
| Example 29 | 40 | 54 | 4 | 1 |
| Example 30 | 8 | 64 | 24 | 2 |
| Example 31 | 40 | 50 | 7 | 1 |
| Example 32 | 19 | 69 | 10 | 1 |

As shown in Table 8, when dimethylchlorosilane was used as the hydrosilane (C), lower yielding ratios of the dihydrogenated product and the trihydrogenated product among by-products tend to be attained. In addition, although the intended chloromethyldichlorosilane was obtained at a high yielding ratio with any of the hydrosilane (C) having a phenyl group, when the molar ratio of Si-H of the hydrosilane (C) with respect to chloromethyltrichlorosilane is great as in Examples 30 and 32, the proportion of chloromethylchlorosilane (ClCH₂SiClH₂) that is a dihydrogenated product increased.

### (Examples 33 to 40)

As shown in Table 9, chloromethyltrichlorosilane, dichloromethylsilane (MeSiCl₂H), and the catalyst (D) were weighed into a pressure tight reaction vessel, followed by replacing the atmosphere in the vessel with a nitrogen atmosphere, and the vessel was closed with an airtight stopper to permit the reaction. Table 10 shows the ratio of the products of the chloromethyl group-containing silane determined by a ¹H-NMR spectrum.

**[Table 9]**

| | Halosilane (B) | | Hydrosilane (C) | | Catalyst (D) | | Reaction temperature | Reaction time |
|---|---|---|---|---|---|---|---|---|
| | Compound name | Amount charged | Compound name | Amount charged | Compound name | Amount charged | | |
| Ex. 33 | ClCH₂SiCl₃ ⁽¹⁾ | 5 mmol | MeSiCl₂H ⁽²⁾ | 5 mmol | TBACl ⁽³⁾ | 0.10 mmol | 90°C | 2 hrs |
| Ex. 34 | ClCH₂SiCl₃ | 5 mmol | MeSiCl₂H | 5 mmol | TBACl | 0.05 mmol | 90°C | 2 hrs |
| Ex. 35 | ClCH₂SiCl₃ | 5 mmol | MeSiCl₂H | 5 mmol | TBACl | 0.025 mmol | 90°C | 2 hrs |
| Ex. 36 | ClCH₂SiCl₃ | 5 mmol | MeSiCl₂H | 5 mmol | TBACl | 0.0005 mmol | 90°C | 2 hrs |
| Ex. 37 | ClCH₂SiCl₃ | 5 mmol | MeSiCl₂H | 5 mmol | TBABr ⁽⁴⁾ | 0.05 mmol | 90°C | 2 hrs |
| Ex. 38 | ClCH₂SiCl₃ | 5 mmol | MeSiCl₂H | 5 mmol | MTBAC ⁽⁵⁾ | 0.05 mmol | 90°C | 2 hrs |
| Ex. 39 | ClCH₂SiCl₃ | 5 mmol | MeSiCl₂H | 5 mmol | BnTBAC ⁽⁶⁾ | 0.05 mmol | 90°C | 2 hrs |
| Ex. 40 | ClCH₂SiCl₃ | 5 mmol | MeSiCl₂H | 5 mmol | MTOAC ⁽⁷⁾ | 0.05 mmol | 90°C | 2 hrs |

| | | | | | | | | |
|---|---|---|---|---|---|---|---|---|
| (1): manufactured by Shin-Etsu Chemical Co., Ltd., LS30 (chloromethyltrichlorosilane) (2): manufactured by Shin-Etsu Chemical Co., Ltd., LS50 (dichloromethylsilane) (3): manufactured by Wako Pure Chemical Industries, Ltd., tetrabutylammonium chloride (4): manufactured by Lion Corporation, tetrabutylammonium bromide (5): manufactured by SACHEM ASIA Inc., methyltributylammonium chloride (6): manufactured by Dishman Japan Limited., benzyltributylammonium chloride (7): manufactured by Dishman Japan Limited., methyltrioctylammonium chloride | | | | | | | | |

**[Table 10]**

| | Reaction product (molar ratio) | | |
|---|---|---|---|
| | ClCH₂SiCl₃ | ClCH₂SiCl₂H | ClCH₂SiClH₂ |
| Example 33 | 44 | 49 | 6 |
| Example 34 | 40 | 54 | 5 |
| Example 35 | 45 | 49 | 6 |
| Example 36 | 98 | 2 | 0 |
| Example 37 | 44 | 49 | 7 |
| Example 38 | 44 | 49 | 7 |
| Example 39 | 60 | 37 | 3 |
| Example 40 | 49 | 44 | 8 |

As in Examples 33 to 36, the amount of the catalyst (D) affects the rate of reaction, and the ratio of the products. When the amount of the catalyst is small, a long period of time is required for yielding the intended chloromethyldichlorosilane, and it is proven that the amount of the catalyst (D) of about 1% by mole relative to the chloromethyltrichlorosilane enables the intended substance to be obtained with good efficiency.

In addition, it was revealed that also the catalysts (D) demonstrated in Examples 37 to 40 are effective as the catalyst (D) of the present invention.

### (Example 41)

Into a reaction vessel equipped with a reflux tube was weighed 1.2 g of tributylmethylammonium chloride (manufactured by SACHEM ASIA Inc.), and the atmosphere in the reaction apparatus was replaced with a dry nitrogen atmosphere. Thereto were added 92 g of chloromethyltrichlorosilane (manufactured by Shin-Etsu Chemical Co., Ltd.), and 58 g of dichloromethylsilane (MeSiCl₂H, manufactured by Shin-Etsu Chemical Co., Ltd.), and the temperature of the mixture was elevated while stirring well. Since reflux of dichloromethylsilane started at a reaction temperature of about 60°C, the reaction was allowed in this situation for 2 hrs, and the ratio of the products of the chloromethyl group-containing silane was determined by ¹H-NMR to reveal the percentage of: chloromethyltrichlorosilane being 69%; chloromethyldichlorosilane being 30%; and chloromethylchlorosilane being 1%. First, the silane mixture and the catalyst were separated by vacuum distillation. Next, fractional distillation was carried out by distillation under ordinary pressure to obtain a fraction containing chloromethyltrichlorosilane as a principal component of about 40 g, a fraction containing chloromethyldichlorosilane as a principal component of about 28 g, a fraction containing methyltrichlorosilane as a principal component of about 25 g, and a fraction containing dichloromethylsilane as a principal component of about 22 g.

### (Example 42)

A reaction was initiated in a similar manner to Example 41 except that 95 g of chloromethyltrichlorosilane, and 63 g of dichloromethylsilane were used. After the reaction was allowed for 2 hrs, 22 g of dichloromethylsilane obtained in Example 41 was further added thereto, and the reaction was further allowed for 2 hrs. The yielding ratio of the chloromethyl group-containing silane was ascertained to reveal: chloromethyltrichlorosilane of 49%; chloromethyldichlorosilane of 44%; and chloromethylchlorosilane of 2%. Distillation operation was performed similarly to Example 41 to obtain 38 g of chloromethyldichlorosilane having a purity of 90%.

### (Examples 43 to 47)

As shown in Table 11, chloromethyltrichlorosilane, dichloromethylsilane, and the catalyst (D) were weighed into a pressure tight reaction vessel, followed by replacing the atmosphere in the vessel with a nitrogen atmosphere, and the vessel was closed with an airtight stopper to permit the reaction. Among the solid catalysts used in these Examples, Amberlyst A-21, and Diaion(R) WA30 used had been washed with water, methanol, toluene and hexane in this order, and then vacuum dried. Amberlyst B-20HG used had been directly subjected to vacuum drying. Table 12 shows the ratio of the products of the chloromethyl group-containing silane determined by a ¹H-NMR spectrum.

**[Table 11]**

| | Halosilane (B) | | Hydrosilane (C) | | Catalyst (D) | | Reaction temperature | Reaction time |
|---|---|---|---|---|---|---|---|---|
| | Compound name | Amount charged | Compound name | Amount charged | Compound name | Amount charged | | |
| Ex. 43 | ClCH₂SiCl₃ ⁽¹⁾ | 5 mmol | MeSiCl₂H ⁽²⁾ | 5 mmol | A21 ⁽³⁾ | 0.05 g | 90°C | 2 hrs |
| Ex. 44 | ClCH₂SiCl₃ | 5 mmol | MeSiCl₂H | 5 mmol | A21 | 0.25 g | 90°C | 2 hrs |
| Ex. 45 | ClCH₂SiCl₃ | 5 mmol | MeSiCl₂H | 5 mmol | A21 | 0.5 g | 90°C | 2 hrs |
| Ex. 46 | ClCH₂SiCl₃ | 5 mmol | MeSiCl₂H | 5 mmol | B20 ⁽⁴⁾ | 0.05 g | 90°C | 2 hrs |
| Ex. 47 | ClCH₂SiCl₃ | 5 mmol | MeSiCl₂H | 5 mmol | WA30 ⁽⁵⁾ | 0.05 g | 90°C | 2 hrs |

| | | | | | | | | |
|---|---|---|---|---|---|---|---|---|
| (1): manufactured by Shin-Etsu Chemical Co., Ltd., LS30 (chloromethyltrichlorosilane) (2): manufactured by Shin-Etsu Chemical Co., Ltd., LS50 (dichloromethylsilane) (3):manufactured by Organo Corporation, Amberlyst A21 (weakly basic anion exchange resin having a dimethylamino group) (4):manufactured by Organo Corporation, Amberlyst B20-HG-DRY (weakly basic anion exchange resin having a dimethylamino group) (5): manufactured by Mitsubishi Chemical Corporation, Diaion(R) WA30 (weakly basic anion exchange resin having a dimethylamino group) | | | | | | | | |

**[Table 12]**

| | Reaction product (molar ratio) | | |
|---|---|---|---|
| | ClCH₂SiCl₃ | ClCH₂SiCl₂H | ClCH₂SiClH₂ |
| Example 43 | 66 | 32 | 1 |
| Example 44 | 53 | 45 | 2 |
| Example 45 | 52 | 43 | 5 |
| Example 46 | 69 | 30 | 1 |
| Example 47 | 74 | 24 | 1 |

As show in Table 12, it was proven that the intended chloromethyldimethoxysilane was obtained even when various types of weakly basic anion exchange resin were used as the catalyst. In particular, when Amberlyst A21 was used, the intended substance was obtained at a high ratio of the products.

### (Example 48)

Into a reaction vessel equipped with a reflux tube was weighed 1.3 g of Amberlyst A-21 (manufactured by Organo Corporation) which had been washed and dried, and the atmosphere in the reaction apparatus was replaced with a dry nitrogen atmosphere. Thereto were added 4.6 g of chloromethyltrichlorosilane, and 2.9 g of dichloromethylsilane (MeSiCl₂H) , and the temperature of the mixture was elevated while stirring well. The reaction was allowed for 2 hrs while refluxing the reaction liquid. The yielding ratio of the chloromethyl group-containing silane was determined by ¹H-NMR to reveal the percentage of: chloromethyltrichlorosilane being 69%; chloromethyldichlorosilane being 31%; and chloromethylchlorosilane being 1%.

The reaction liquid was removed in the state in which Amberlyst A21 was left in the reaction apparatus, and thereto were charged chloromethyltrichlorosilane and dichloromethylsilane similarly to the aforementioned Examples to permit the reaction. The reaction was repeated four times, revealing the yielding ratios of chloromethyldichlorosilane of 36%, 39%, 36% and 36%, respectively.

### (Examples 49 to 52)

As shown in Table 13, chloromethylmethyldichlorosilane, the hydrosilane (C), and the catalyst (D) were weighed into a glass tube type reaction vessel, which was sealed after devolatilization to permit the reaction. Table 14 shows the ratio of the products of the chloromethyl group-containing silane determined by a ¹H-NMR spectrum.

**[Table 13]**

| | Halosilane (B) | | Hydrosilane (C) | | Catalyst (D) | | Reaction temperature | Reaction time |
|---|---|---|---|---|---|---|---|---|
| | Compound name | Amount charged | Compound name | Amount charged | Compound name | Amount charged | | |
| Ex. 49 | ClCH₂ (Me)SiCl₂ ⁽¹⁾ | 1 mmol | PhSiH₃ ⁽²⁾ | 1 mmol | TBACl ⁽⁴⁾ | 0.01 mmol | 90°C | 2 hrs |
| Ex. 50 | ClCH₂ (Me) SiCl₂ | 1 mmol | PhSiH₃ | 1 mmol | TBPCl ⁽⁶⁾ | 0.01 mmol | 90°C | 2 hrs |
| Ex. 51 | ClCH₂ (Me)SiCl₂ | 1 mmol | Ph₂SiH₂ ⁽³⁾ | 1 mmol | TBACl ⁽⁴⁾ | 0.01 mmol | 90°C | 2 hrs |
| Ex. 52 | ClCH₂ (Me)SiCl₂ | 1 mmol | Ph₂SiH₂ | 1 mmol | TBPCl ⁽⁶⁾ | 0.01 mmol | 90°C | 2 hrs |

| | | | | | | | | |
|---|---|---|---|---|---|---|---|---|
| (1): manufactured by Shin-Etsu Chemical Co., Ltd., LS110 (chloromethylmethyldichlorosilane) (2): manufactured by Gelest, SIP6750.0 (phenylsilane) (3): manufactured by Gelest, SID4559.0 (diphenylsilane) (4): manufactured by Wako Pure Chemical Industries, Ltd., tetrabutylammonium chloride (5): manufactured by Sigma-Aldrich Japan Corporation, tetrabutylphosphonium chloride | | | | | | | | |

**[Table 14]**

| | Reaction product (molar ratio) | | |
|---|---|---|---|
| | ClCH₂ (Me) SiCl₂ | ClCH₂ (Me) SiClH | ClCH₂ (Me) SiH₂ |
| Example 49 | 32 | 62 | 6 |
| Example 50 | 30 | 63 | 7 |
| Example 51 | 27 | 63 | 10 |
| Example 52 | 30 | 60 | 10 |

As shown in Table 14, the intended chloromethylmethylchlorosilane (ClCH₂(CH₃)SiClH) was successfully obtained also with chloromethylmethyldichlorosilane by allowing a reaction with the hydrosilane (C) having a phenyl group.

## Claims

1. A method for producing (A) a halohydrosilane compound represented by the general formula (1):
H-SiR²_{c}(CR¹_{3-b}Y_{b})ₐX_{3-a-c} (1)
wherein, R¹ each independently represents a hydrogen atom or a substituted or unsubstituted hydrocarbon group having 1 to 20 carbon atoms; R² each independently represents a substituted or unsubstituted hydrocarbon group having 1 to 20 carbon atoms; X each independently represents a halogen atom; Y represents a group selected from a halogen atom, -OR³, -NR⁴R⁵, -N=R⁶, -SR⁷ (wherein R³, R⁴, R⁵, and R⁷ each represent a hydrogen atom or a substituted or unsubstituted hydrocarbon group having 1 to 20 carbon atoms; and R⁶ represents a bivalent substituted or unsubstituted hydrocarbon group having 1 to 20 carbon atoms), a perfluoroalkyl group having 1 to 20 carbon atoms, and a cyano group; a is 1 or 2; b is any one of 1, 2 and 3; c is 1 or 0; and the sum of a and c does not exceed 2,
the method comprising allowing (B) a halosilane compound represented by the general formula (2):
SiR²_{c}(CR¹_{3-b}Y_{b})ₐX_{4-a-c} (2)
wherein, R¹, R², X, Y, a, b and c are as defined above;
to react with (C) a hydrosilane compound.

2. The method for producing a silane compound according to claim 1, wherein X is a chloro group.

3. The method for producing a silane compound according to claim 1 or 2, wherein Y is a halogen atom.

4. The method for producing a silane compound according to any one of claims 1 to 3, wherein the halohydrosilane compound (A) is chloromethyldichlorosilane (ClCH₂SiCl₂H).

5. The method for producing a silane compound according to any one of claims 1 to 4, wherein the hydrosilane compound (C) is (C1) a monohydrosilane compound having only one hydro group on one silicon atom.

6. The method for producing a silane compound according to claim 5, wherein the monohydrosilane compound (C1) is a compound represented by the general formula (3):
H-SiR⁸_{g}Z_{3-g} (3)
wherein, R⁸ each independently represents a group selected from a substituted or unsubstituted hydrocarbon group having 1 to 20 carbon atoms, and R⁹₃SiO- (wherein R⁹ each independently represents a substituted or unsubstituted hydrocarbon group having 1 to 20 carbon atoms); Z each independently represents a group selected from a halogen atom, an alkoxy group, and an aryloxy group; and g is any one of 1, 2 and 3.

7. The method for producing a silane compound according to claim 5, wherein the hydrosilane compound (C) is methyldichlorosilane.

8. The method for producing a silane compound according to claim 6, wherein g in the general formula (3) is 3.

9. The method for producing a silane compound according to any one of claims 1 to 4, wherein the hydrosilane compound (C) is (C2) an arylhydrosilane compound represented by the general formula (4):
H_{d}SiR¹⁰ₑR¹¹_{4-d-e} (4)
wherein, R¹⁰ each independently represents a substituted or unsubstituted aromatic hydrocarbon group; R¹¹ each independently represents a group selected from a substituted or unsubstituted aliphatic hydrocarbon group having 1 to 20 carbon atoms, a halogen atom, an alkoxy group, and an aryloxy group; d is any one of 1, 2 and 3; e is any one of 1, 2 and 3; and the sum of d and e does not exceed 4.

10. The method for producing a silane compound according to claim 9, wherein d is 1.

11. The method for producing a silane compound according to claim 9 or 10, wherein e is 1 or 2.

12. The method for producing a silane compound according to claim 9, wherein the hydrosilane compound (C) is any one of phenylsilane, diphenylsilane, and dimethylphenylsilane.

13. The method for producing a silane compound according to any one of claims 1 to 12, wherein at least one selected from a quaternary ammonium salt and a quaternary phosphonium salt is used as (D) a catalyst of a reaction of the halosilane compound (B) and the hydrosilane compound (C).

14. The method for producing a silane compound according to claim 13, wherein the catalyst (D) is any one of a tetrabutylammonium salt and a methyltributylammonium salt.

15. The method for producing a silane compound according to claim 13 or 14, wherein the catalyst (D) is a quaternary ammonium chloride salt.

16. The method for producing a silane compound according to claim 13, wherein the catalyst (D) is at least one selected from tetrabutylammonium chloride and tributylmethylammonium chloride.

17. The method for producing a silane compound according to any one of claims 1 to 12, wherein an ion exchange resin is used as (D) a catalyst of a reaction of the halosilane compound (B) and the hydrosilane compound (C).

18. The method for producing a silane compound according to claim 17, wherein the ion exchange resin is an anion exchange resin.

19. The method for producing a silane compound according to claim 18, wherein the anion exchange resin is an anion exchange resin having a substituted or unsubstituted amino group.

## Patentansprüche

1. Verfahren zur Herstellung einer Halohydrosilanverbindung (A) mit der allgemeinen Formel (1):
H-SiR²_{c}(CR¹_{3-b}Y_{b})ₐX_{3-a-c} (1)
worin R¹ jeweils unabhängig voneinander für ein Wasserstoffatom oder eine substituierte oder unsubstituierte Kohlenwasserstoffgruppe mit 1 bis 20 Kohlenstoffatomen steht; R² jeweils unabhängig voneinander für eine substituierte oder unsubstituierte Kohlenwasserstoffgruppe mit 1 bis 20 Kohlenstoffatomen steht; X jeweils unabhängig voneinander für ein Halogenatom steht; Y für eine Gruppe steht, die aus einem Halogenatom, -OR³, -NR⁴R⁵, -N=R⁶, -SR⁷ (worin R³, R⁴, R⁵ und R⁷ jeweils für ein Wasserstoffatom oder eine substituierte oder unsubstituierte Kohlenwasserstoffgruppe mit 1 bis 20 Kohlenstoffatomen stehen; und R⁶ für eine bivalente substituierte oder unsubstituierte Kohlenwasserstoffgruppe mit 1 bis 20 Kohlenstoffatomen steht), einer Perfluoralkylgruppe mit 1 bis 20 Kohlenstoffatomen und einer Cyanogruppe ausgewählt ist; a 1 oder 2 ist; b 1, 2 oder 3 ist; c 1 oder 0 ist; und die Summe von a und c nicht 2 übersteigt,
wobei das Verfahren die Umsetzung einer Halosilanverbindung (B) mit der allgemeinen Formel (2):
SiR²_{c}(CR¹_{3-b}Y_{b})ₐX_{4-a-c} (2)
worin R¹, R², X, Y, a, b und c wie oben definiert sind;
mit einer Hydrosilanverbindung (C) umfasst.

2. Verfahren zur Herstellung einer Silanverbindung gemäß Anspruch 1, worin X eine Chlorgruppe ist.

3. Verfahren zur Herstellung einer Silanverbindung gemäß Anspruch 1 oder 2, worin Y ein Halogenatom ist.

4. Verfahren zur Herstellung einer Silanverbindung gemäß einem der Ansprüche 1 bis 3, bei dem die Halohydrosilanverbindung (A) Chlormethyldichlorsilan (ClCH₂SiCl₂H) ist.

5. Verfahren zur Herstellung einer Silanverbindung gemäß einem der Ansprüche 1 bis 4, bei dem die Hydrosilanverbindung (C) eine Monohydrosilanverbindung (C1) mit nur einer Hydridogruppe an einem Siliciumatom ist.

6. Verfahren zur Herstellung einer Silanverbindung gemäß Anspruch 5, bei dem die Monohydrosilanverbindung (C1) eine Verbindung mit der allgemeinen Formel (3) ist:
H-SiR⁸_{g}Z_{3-g} (3)
worin R⁸ jeweils unabhängig voneinander für eine Gruppe steht, die aus einer substituierten oder unsubstituierten Kohlenwasserstoffgruppe mit 1 bis 20 Kohlenstoffatomen und R⁹₃SiO- (worin R⁹ jeweils unabhängig voneinander für eine substituierte oder unsubstituierte Kohlenwasserstoffgruppe mit 1 bis 20 Kohlenstoffatomen steht) ausgewählt ist; Z jeweils unabhängig voneinander für eine Gruppe steht, die aus einem Halogenatom, einer Alkoxygruppe und einer Aryloxygruppe ausgewählt ist; und g 1, 2 oder 3 ist.

7. Verfahren zur Herstellung einer Silanverbindung gemäß Anspruch 5, bei dem die Hydrosilanverbindung (C) Methyldichlorsilan ist.

8. Verfahren zur Herstellung einer Silanverbindung gemäß Anspruch 6, bei dem in der allgemeinen Formel (3) g = 3 ist.

9. Verfahren zur Herstellung einer Silanverbindung gemäß einem der Ansprüche 1 bis 4, bei dem die Hydrosilanverbindung (C) eine Arylhydrosilanverbindung (C2) mit der allgemeinen Formel (4) ist:
H_{d}SiR¹⁰ₑR¹¹_{4-d-e} (4)
worin R¹⁰ jeweils unabhängig voneinander für eine substituierte oder unsubstituierte aromatische Kohlenwasserstoffgruppe steht; R¹¹ jeweils unabhängig voneinander für eine Gruppe steht, die aus einer substituierten oder unsubstituierten aliphatischen Kohlenwasserstoffgruppe mit 1 bis 20 Kohlenstoffatomen, einem Halogenatom, einer Alkoxygruppe und einer Aryloxygruppe ausgewählt ist; d 1, 2 oder 3 ist; e 1, 2 oder 3 ist; und die Summe von d und e nicht 4 überschreitet.

10. Verfahren zur Herstellung einer Silanverbindung gemäß Anspruch 9, bei dem d = 1 ist.

11. Verfahren zur Herstellung einer Silanverbindung gemäß Anspruch 9 oder 10, bei dem e 1 oder 2 ist.

12. Verfahren zur Herstellung einer Silanverbindung gemäß Anspruch 9, bei dem die Hydrosilanverbindung (C) eines von Phenylsilan, Diphenylsilan und Dimethylphenylsilan ist.

13. Verfahren zur Herstellung einer Silanverbindung gemäß einem der Ansprüche 1 bis 12, bei dem als Katalysator (D) für die Reaktion der Halosilanverbindung (B) mit der Hydrosilanverbindung (C) mindestens einer, ausgewählt aus einem quartärem Ammoniumsalz und einem quartärem Phosphoniumsalz, verwendet wird.

14. Verfahren zur Herstellung einer Silanverbindung gemäß Anspruch 13, bei dem der Katalysator (D) ein Tetrabutylammoniumsalz oder ein Methyltributylammoniumsalz ist.

15. Verfahren zur Herstellung einer Silanverbindung gemäß Anspruch 13 oder 14, bei dem der Katalysator (D) ein quartäres Ammoniumchloridsalz ist.

16. Verfahren zur Herstellung einer Silanverbindung gemäß Anspruch 13, bei dem der Katalysator (D) zumindest einer, ausgewählt aus Tetrabutylammoniumchlorid und Tributylmethylammoniumchlorid, ist.

17. Verfahren zur Herstellung einer Silanverbindung gemäß einem der Ansprüche 1 bis 12, bei dem ein Ionenaustauscherharz als Katalysator (D) für die Reaktion der Halosilanverbindung (B) mit der Hydrosilanverbindung (C) verwendet wird.

18. Verfahren zur Herstellung einer Silanverbindung gemäß Anspruch 17, bei dem das Ionenaustauscherharz ein Anionenaustauscherharz ist.

19. Verfahren zur Herstellung einer Silanverbindung gemäß Anspruch 18, bei dem das Anionenaustauscherharz ein Anionenaustauscherharz mit einer substituierten oder unsubstituierten Aminogruppe ist.

## Revendications

1. Procédé pour produire un composé halohydrosilane (A) représenté par la formule générale (1) :
H-SiR²_{c}(CR¹_{3-b}Y_{b})ₐX_{3-a-c} (1)
dans laquelle, R¹ chacun indépendamment représente un atome d'hydrogène ou un groupe hydrocarboné substitué ou non substitué ayant de 1 à 20 atomes de carbone ; R² chacun indépendamment représente un groupe hydrocarboné substitué ou non substitué ayant de 1 à 20 atomes de carbone ; X chacun indépendamment représente un atome d'halogène ; Y représente un groupe sélectionné à partir d'un atome d'halogène, -OR³, -NR⁴R⁵, -N=R⁶, -SR⁷ (dans lesquels R³, R⁴, R⁵, et R⁷ représentent chacun un atome d'hydrogène ou un groupe hydrocarboné substitué ou non substitué ayant de 1 à 20 atomes de carbone ; et R⁶ représente un groupe hydrocarboné bivalent substitué ou non substitué ayant de 1 à 20 atomes de carbone), un groupe perfluoroalkyle ayant de 1 à 20 atomes de carbone, et un groupe cyano ; a est 1 ou 2 ; b est l'un quelconque de 1, 2 ou 3 ; c est 1 ou 0 ; et la somme de a et c ne dépasse pas 2,
le procédé comprenant l'étape consistant à permettre à (B) un composé halosilane représenté par la formule générale (2) :
SiR²_{c}(CR¹_{3-b}Y_{b})ₐX_{4-a-c} (2)
dans laquelle, R¹, R², X, Y, a, b et c sont définis comme ci-dessus ;
de réagir avec (C) un composé hydrosilane.

2. Procédé pour produire un composé silane selon la revendication 1, dans lequel X est un groupe chloro.

3. Procédé pour produire un composé silane selon la revendications 1 ou 2, dans lequel Y est un atome d'halogène.

4. Procédé pour produire un composé silane selon l'une quelconque des revendications 1 à 3, dans lequel le composé halohydrosilane (A) est du chlorométhyldichlorosilane (ClCH₂SiCl₂H).

5. Procédé pour produire un composé silane selon l'une quelconque des revendications 1 à 4, dans lequel le composé hydrosilane (C) est (C1) un composé monohydrosilane ayant seulement un groupe hydro sur un atome de silicium.

6. Procédé pour produire un composé silane selon la revendication 5, dans lequel le composé monohydrosilane (C1) est un composé représenté par la formule générale (3) :
H-SiR⁸_{g}Z_{3-g} (3)
dans laquelle, R⁸ chacun indépendamment représente un groupe sélectionné à partir d'un groupe hydrocarboné substitué ou non substitué ayant de 1 à 20 atomes de carbone, et R⁹₃SiO- (dans lequel R⁹ chacun indépendamment représente un groupe hydrocarboné substitué ou non substitué ayant de 1 à 20 atomes de carbone) ; Z chacun indépendamment représente un groupe sélectionné à partir d'un atome d'halogène, un groupe alcoxy, et un groupe aryloxy ; et g est l'un quelconque de 1, 2 ou 3.

7. Procédé pour produire un composé silane selon la revendication 5, dans lequel le composé hydrosilane (C) est du méthyldichlorosilane.

8. Procédé pour produire un composé silane selon la revendication 6, dans lequel g dans la formule générale (3) est 3.

9. Procédé pour produire un composé silane selon l'une quelconque des revendications 1 à 4, dans lequel le composé hydrosilane (C) est (C2) un composé arylhydrosilane représenté par la formule générale (4) :
H_{d}SiR¹⁰ₑR¹¹_{4-d-e} (4)
dans laquelle, R¹⁰ chacun indépendamment représente un groupe hydrocarboné aromatique substitué ou non substitué ; R¹¹ chacun indépendamment représente un groupe sélectionné à partir d'un groupe hydrocarboné aliphatique substitué ou non substitué ayant de 1 à 20 atomes de carbone, un atome d'halogène, un groupe alcoxy, et un groupe aryloxy ; d est l'un quelconque de 1, 2 et 3 ; e est l'un quelconque de 1, 2 et 3 ; et la somme de d et e ne dépasse pas 4.

10. Procédé pour produire un composé silane selon la revendication 9, dans lequel d est 1.

11. Procédé pour produire un composé silane selon la revendication 9 ou 10, dans lequel e est 1 ou 2.

12. Procédé pour produire un composé silane selon la revendication 9, dans lequel le composé hydrosilane (C) est n'importe lequel de phénylsilane, diphénylsilane, et diméthylphénylsilane.

13. Procédé pour produire un composé silane selon l'une quelconque des revendications de 1 à 12, dans lequel au moins un sélectionné à partir d'un sel d'ammonium quaternaire et d'un sel phosphonium quaternaire est utilisé en tant que (D) un catalyseur d'une réaction du composé halosilane (B) et du composé hydrosilane (C).

14. Procédé pour produire un composé silane selon la revendication 13, dans lequel le catalyseur (D) est n'importe lequel d'un sel de tétrabutylammonium et d'un sel de méthyltributylammonium.

15. Procédé pour produire un composé silane selon la revendication 13 ou 14, dans lequel le catalyseur (D) est un sel de chlorure d'ammonium quaternaire.

16. Procédé pour produire un composé silane selon la revendication 13, dans lequel le catalyseur (D) est au moins un sélectionné à partir de chlorure de tétrabutylammonium et de chlorure de tributylméthylammonium.

17. Procédé pour produire un composé silane selon l'une quelconque des revendications 1 à 12, dans lequel une résine échangeuse d'ions est utilisée en tant que (D) un catalyseur d'une réaction du composé halosilane (B) et du composé hydrosilane (C).

18. Procédé pour produire un composé silane selon la revendication 17, dans lequel la résine échangeuse d'ions est une résine échangeuse d'anions.

19. Procédé pour produire un composé silane selon la revendication 18, dans lequel la résine échangeuse d'anions est une résine échangeuse d'anions ayant un groupe amino substitué ou non substitué.
